Europäisches Patentamt

European Patent Office

Office européen des brevets

(19)

(11) Veröffentlichungsnummer: **0 237 635**
**B1**

(12) **EUROPÄISCHE PATENTSCHRIFT**

(45) Veröffentlichungstag der Patentschrift:
16.08.89

(21) Anmeldenummer: 86116883.9

(22) Anmeldetag: 04.12.86

(51) Int. Cl.⁴: **B65H 16/06,** B65H 18/02,
B65H 19/00, F16D 1/04

(54) Klapplager zum Kuppeln von Wickelstäben mit einer Mitnehmerwelle.

(30) Priorität: 14.02.86  DE 3604611

(43) Veröffentlichungstag der Anmeldung:
23.09.87 Patentblatt 87/39

(45) Bekanntmachung des Hinweises auf die Patenterteilung:
16.08.89 Patentblatt 89/33

(84) Benannte Vertragsstaaten:
AT CH ES FR GB IT LI

(56) Entgegenhaltungen:
DD-A- 200 911
DE-C- 2 932 895

(73) Patentinhaber: Kunz Maschinen- und Apparatebau
GmbH, Im Siegmeer 7, D-7850 Lörrach-Hauingen(DE)

(72) Erfinder: Kunz, Wolfgang, Siegmeer 7,
D-7850 Lörrach 8(DE)

(74) Vertreter: Schmitt, Hans, Dipl.-Ing. et al, Patentanwälte
Dipl.-Ing H. Schmitt Dipl.-Ing. W. Maucher
Dreikönigstrasse 13, D-7800 Freiburg(DE)

ACTORUM AG

## Beschreibung

Die Erfindung betrifft ein Klapplager zum Kuppeln von Wikkelstäben mit einer Mitnehmerwelle bei von einer Rolle oder auf eine Rolle arbeitenden Maschinen, wobei der Wickelstab mit einem im Querschnitt mehrkantigen oder zumindest teilweise runden, wenigstens eine Abflachung aufweisenden Zapfen quer zu seiner Erstreckung in eine dem Querschnitt des Zapfens entsprechende Kupplungsflächen aufweisende Ausnehmung eines Aufnahmeteiles einsetzbar bzw. aus diesem aushebbar ist und die Ausnehmung in Einsetzrichtung zumindest an ihrer tiefsten Stelle einander sich nähernde Kupplungsflächen entsprechend der Anordnung solcher Flächen an dem mehrkantigen oder teilweise runden Zapfen des Wickelstabes hat und wobei der Zapfen in Gebrauchsstellung von einem an einem schwenkbaren und mitdrehenden Handrad od.dgl.befindlichen Verschlußteil übergriffen ist.

Ein derartiges Klapplager für einen im Querschnitt quadratischen Zapfen eines Wickelstabes mit beim Einsetzen zwei horizontalen und zwei vertikalen Flächen auch an der Ausnehmung ist aus der DE-PS 917 592 bekannt und hat den Vorteil, daß beim Anlaufen des Klapplagers das Handrad selbst tätig geschlossen wird. Dabei liegen drei Flächen des Zapfens innerhalb der Ausnehmung an, während der Verschlußteil des Handrades die vierte Seite in Gebrauchsstellung beaufschlagt. Nachteilig ist bei diesem Klapplager, daß der Wickelstab bzw. die Wickelwelle während des Einführvorganges absolut parallel zur Ausnehmung des Aufnahmeteiles angeordnet sein muß und genau senkrecht in die Ausnehmung eingeführt werden muß. Da eine vollständige Lagerung einer solchen Wickelwelle praktisch immer zwei derartige Klapplager aufweist, die materialbedingt einen axialen Abstand von 1 m bis 3 m haben können, ist eine solche Einführmethode nur mit einer Doppelbedienung durchführbar, da zwischen Wellenzapfen und Aufnahme möglich kein Spiel bestehen soll. Dies bedeutet, daß während des Einführens an jedem Lager eine Bedienungsperson die winkelrechte und axiale Lage kontrollieren muß. Bei zunehmender Genauigkeit, d.h. verringertem Spiel zwischen Zapfen und Aufnahmeteil stößt diese Art der Lagerung an eine Grenze, wo das Einführen praktisch unmöglich wird. Der Vorteil dieser lange bewährten Lagerung besteht jedoch darin, daß bei eingeführtem Kupplungszapfen der Wickelwelle von dieser auf die Lagerung und umgekehrt ein Drehmoment übertragen werden kann, welches die Lagerung bzw. das Klapp-Handrad beim Anlaufen sicher verschließt.

Aus der US-PS 3 147 985 ist bereits eine vergleichbare Lagervorrichtung bekannt, bei welcher der im Querschnitt quadratische Zapfen beim Einführen mit einer an der tiefsten Stelle befindlichen Kante seines Querschnittes in eine V-förmige Ausnehmung des Aufnahmeteiles hineingleitet, wodurch eine Selbstzentrierung und somit eine gute Genauigkeit erreichbar ist. Eine vergleichbare, das Einführen erleichternde Anordnung ist aus einem Ausführungsbeispiel der DE-PS 29 32 895 bekannt, bei welcher ein Wellenzapfen mit dreieckigem Querschnitt beim Einführen mit einer seiner Kanten nach unten liegend angeordnet ist und in eine entsprechende V-förmige Ausnehmung des Aufnahmeteiles hineingleitet. Mit einer derart gestalteten Lagerung können auch kleinste Spiele zwischen Wellenzapfen und Aufnahmeteil sicher gehandhabt werden, d.h.vor allem das Einführen des Wellenzapfens in die Kupplungsaufnahme ist aufgrund dieser Formgebung selbst bei geringstmöglichem Spiel sehr einfach, da geringe Lagerabweichungen zu Beginn des Einführens durch die sich einander nähernden Kupplungsflächen selbsttätig beseitigt werden. Somit ermöglicht diese Art der Ausnehmung des Aufnahmeteiles eine Bedienung auch mit vollautomatischen Hebezeugen, d.h. ohne Bedienungspersonal und insbesondere ohne zwei Bedienungspersonen. Dies stellt eine erhebliche Vereinfachung sowohl beim Bestücken als auch beim Entladen der Klapplager mit den Wickelstäben dar.

Dieser beachtliche und in vielen Fällen bewährte Vorteil wird jedoch dadurch erkauft, daß in eingelegtem Zustand lediglich zwei Seiten des Zapfens im Lager liegen und somit keine sichere kraftschlüssige Verbindung in Drehrichtung besteht. In ungünstigen Fällen kann es beim Anlaufen an der dann am stärksten belasteten Schrägfläche zu einer aufwärts gerichteten Krafkomponente kommen, die zu einem Herausgleiten des Zapfens und damit des Wickelstabes aus der Aufnahme führt. Der Kupplungszapfen wandert dann mit seinem Mittelpunkt innerhalb der Ausnehmung nach oben und kann so den Schließvorgang des Klapplagers blockieren.Dies kann zu erheblichen Schäden an der Lagerung und auch der gesamten Maschine führen, weil bei einer weiteren Drehung dann die Wickelstäbe exzentrisch oder schräg stehen oder völlig herausfallen können.

Zwar wurde zur Beseitigung dieser Gefahr durch die DE-PS 31 27 553 eine mechanische Verstellvorrichtung für den Schließvorgang des Handrades bekannt, die das Handrad so rechtzeitig verschließt, daß die Welle durch die an den Schrägflächen auftretenden Kräfte nicht aus ihrer Ausnehmung aussteigen kann. Dazu ist jedoch ein Steueraufwand notwendig, der nicht in allen Anwendungsfällen gerechtfertigt ist.

Die vorerwähnte Gefahr eines Auswanderns oder Aussteigens besteht dabei auch dann, wenn zumindest im unteren Bereich der Ausnehmung des Aufnahmeteiles die Kupplungsflächen im Querschnitt einander ergänzende Kreisbögen sind, weil auch dadurch eine insgesamt konische Annäherung dieser Kupplungsflächen gegeben ist. Darüberhinaus ist in einem solchen Falle die Übertragung des Drehmomentes von dem Klapplager auf den Wickelstab und umgekehrt auf eine oder mehrere Abflachungen beschränkt.

Es besteht deshalb die Aufgabe, ein Klapplager der eingangs erwähnten Art zu schaffen, bei welchem ein Selbstzentrieren das Einlegen der Zapfen in die entsprechend geformten Ausnehmungen des Aufnahmeteiles ohne großen Bedienungsaufwand möglich ist, wobei aber dennoch das Drehmoment insbesondere beim Anlaufen so übertragen werden soll, daß die Wellen bzw. ihre Kupplungszapfen nicht aus der Ausnehmung auswandern, bevor das Handrad verschlossen ist, wobei eine Hilfsvorrichtung zum Verschließen des Handrades nicht erforderlich sein soll.

Die Lösung dieser scheinbar widersprüchlichen Aufgabe besteht erfindungsgemäß darin, daß an der Stirnseite des Zapfens und der entsprechenden Gegenfläche der Ausnehmung des Aufnahmeteiles eine beim Einsetzen des Zapfens wirksam werdende Kupplung vorgesehen ist.

Dadurch wird erreicht, daß nicht nur die Seitenflächen des Zapfens, sondern auch seine Stirnseite ein Drehmoment aufnehmen bzw. übertragen kann, so daß beim ersten Anlaufen, wenn das Drehmoment über schräge Flächen nicht vollständig übertragen werden könnte, dies über die Stirnseite erfolgen kann. Es hat sich gezeigt, daß dadurch ein Auswandern von im Querschnitt konischen Wickelzapfen ohne zusätzliche Maßnahmen wie Hilfsgeräte zum Verschließen des Handrades od.dgl. vermieden werden kann und das zum Verschliessen des Handrades benötigte Drehmoment sicher übertragen wird. Somit können die Vorteile von sich in Einlegerichtung verjüngende Ausnehmungen der Aufnahmeteile beibehalten werden, ohne deren Nachteile in Kauf zu nehmen. Darüberhinaus ergibt sich eine verbesserte Übertragung des Drehmomentes, weil diese nun nicht mehr nur auf die Seitenflächen der Zapfen beschränkt ist, sondern auch die Stirnseite einbezieht. Somit werden die Längsflächen der Zapfen teilweise entlastet, was eine Verringerung des Verschleißes und somit eine Verlängerung der Lebensdauer erwarten läßt.

Besonders zweckmäßig ist es, wenn die Kupplung zwischen Zapfen und Aufnahmeteil zwei formschlüssig ineinandergreifende Kupplungselemente aufweist, deren eines in der Wellenaufnahme und deren anderes an der Stirnseite des Zapfens angeordnet sind. Eine formschlüssige Kupplung ist besonders gut geeignet, sofort beim Anlaufen ein hohes Drehmoment zu übertragen.

Eine einfach realisierbare Ausführungsform der Erfindung kann darin bestehen, daß als das eine Kupplungselement wenigstens ein in Einlegerichtung orientierter, nach der Aushebeseite offen mündender Schlitz und als das andere Kupplungselement wenigstens ein in Gebrauchsstellung und in Drehrichtung formschlüssig in diesen Schlitz eingreifender, ein Drehmoment übertragender, gegenüber der Zapfen mitte exzentrischer Vorsprung vorgesehen sind. Dies ergibt eine beim Einlegen des Wickelstabes besonders einfach zu verbindende formschlüssige Kupplung hoher Effektivität bei dennoch geringem Herstellungsaufwand.

Dabei kann der als das eine Kupplungselement dienende Schlitz an der Stirnseite des Zapfens vorgesehen sein und an der beim Einsetzen am tiefsten liegenden Kante - die beim Ausheben des Zapfens seiner Aushebeseite entspricht - randoffen münden und der Kupplungsvorsprung kann in der Wellenaufnahme - an der inneren Stirnseite von deren Ausnehmung - angeordnet sein. Beim Einlegen einer Wickelwelle mit einem derartigen mehrkantigen Zapfen greift der Schlitz in Einlegeposition über den Vorsprung, wodurch die formschlüssige stirnseitige Kupplung hergestellt ist.

Eine andere Ausführungsform, die besonders vorteilhaft dann ist, wenn ein Zapfen eine Abflachung od.dgl. im übrigen aber einen wenigstens teilweise kreisrunden Querschnitt hat, kann darin bestehen, daß der Schlitz in der vertikalen Wandung der Ausnehmung des Aufnahmeteiles in der Bewegungsrichtung des Zapfens bei seinem Einsetzen orientiert angeordnet und nach der Oberseite der Ausnehmung des Aufnahmeteiles - somit wieder nach der Aushebeseite hin - randoffen mündet und wenn der Kupplungsvorsprung an der Stirnseite des Zapfens exzentrisch angeordnet vorsteht.

Um das Einsetzen der Wickelwelle und ihres einen Kupplungsschlitz aufweisenden Zapfens zu erleichtern, ist es zweckmäßig, wenn der Kupplungsschlitz an dem Zapfen über dessen gesamte Stirnseite verläuft und an seinen beiden Enden randoffen ist. Noch günstiger für die Bedienung und das schnelle Einlegen ist es, wenn mehrere, wenigstens zwei sich kreuzende Kupplungsschlitze an der Stirnseite des Zapfens vorgesehen sind, die bei einem im Querschnitt mehrkantigen Zapfen jeweils im Bereich einer Kante randoffen münden. Somit kann ein solcher mehrkantiger Zapfen in beliebiger Orientierung in die Ausnehmung mit den sich konisch nähernden Gegenflächen der Wellenaufnahme eingelegt werden und trifft jedesmal mit einer Schlitzmündung auf den zugehörigen Kupplungsvorsprung.

Bei einem aus Herstellungsgründen häufig bevorzugten Vierkant als Kupplungszapfen können also zwei auf den Diagonalen der Stirnseiten des Vierkantes verlaufende randoffene Schlitze vorgesehen sein. Da der Kupplungsvorsprung an einer exzentrisch möglichst tiefen Stelle in der Ausnehmung der Wellenaufnahme liegt, kann beim Einsetzen des mehrkantigen, vorzugsweise vierkantigen Kupplungszapfens zunächst die Zentrierwirkung der Schrägflächen ausgenutzt werden, wodurch auch der Kupplungsschlitz in die richtige Position zu dem Vorsprung kommt und diesen selbsttätig beim Einsetzen übergreift. Beim Anlaufen wird dann sofort zunächst an der Stirnseite das Drehmoment über diese aus Vorsprung und Schlitz bestehende Kupplung übertragen, so daß ein Auswandern bewirkende Kraftkomponenten an den Schrägflächen vermieden werden.

Dies wird um so leichter erreicht, wenn der Kupplungsvorsprung in seiner Breite der Weite des Kupplungsschlitzes entspricht, so daß beim Anlaufen sofort eine entsprechende Mitnahme erfolgt.

Eine das Einsetzen noch weiter verbessernde Ausgestaltung der Erfindung von erheblicher Bedeutung und großem Vorteil kann darin bestehen, daß der Kupplungsvorsprung zum Ausgleichen eines nicht lagegerechten Einlegens des Mehrkantzapfens nachgiebig, vorzugsweise federbelastet ist und eine in Einlegerichtung mehr und mehr vorstehende Schrägfläche od.dgl.zum Zurückdrängen durch das Einlegen des Wellen zapfens gegen die Kraft der Feder hat. Dadurch wird erreicht, daß der Kupplungsvorsprung ausweichen kann, wenn beim Einlegen des Wellenzapfens nicht sofort der Eingriff in den zugehörigen Schlitz erfolgt. Sowie dann der Schlitz in den Bereich des Kupplungszapfens gelangt, was durch die selbsttätige Zentrierung in jedem Falle erfolgen wird,kann die Feder den Vorsprung in Kupplungsposition bewegen. Dabei kann dies sowohl bei einem Kupplungsvorsprung innerhalb der Ausnehmung des Aufnahmeteiles als auch bei einem solchen Vorsprung an der Stirnseite des Zapfens zur Anwendung kommen.

Ausgestaltungen dieses federnd nachgiebigen Kupplungsvorsprunges sind Gegenstand der Ansprüche 11 bis 15. Vor allem ein axial nachgiebiger, von einer entsprechenden Feder beaufschlagter Kupplungsstift hat dabei den erheblichen Vorteil, nachträglich in schon bestehende Klapplager eingebaut werden zu können. Somit können Klapplager der eingangs erwähnten Art auch nachträglich erfindungsgemäß umgerüstet werden, indem in die auch von der Stirnseite her gut zugängliche Rückwand der Ausnehmung des Aufnahmeteiles in deren unteren Bereich ein federbelasteter Kupplungsvorsprung nach Anbringung einer entsprechenden Bohrung eingesetzt wird, während die zugehörigen Wickelstäbe an ihren Kupplungszapfen nur mit einer Quernute bzw. einem Schlitz versehen werden müssen, der diesen nachträglich eingefügten Kupplungsvorsprung formschlüssig übergreifen kann. Besonders zweckmäßig ist es sowohl bei solchen nachgerüsteten als auch bei von vorneherein derartig gestalteten Klapplagern, wenn dabei der Kupplungsstift in einer Führungsbohrung des Aufnahmeteiles nahe der unteren Spitze oder Umrißlinie des Querschnittes der Aufnahme mit größtmöglicher Exzentrizität zur Wellenmitte angeordnet ist,damit für die Übertragung des Drehmomentes an der Stirnseite ein größtmöglicher Hebelarm zur Verfügung steht.

Nachstehend ist die Erfindung mit ihren ihr als wesentlich zugehörenden Einzelheiten anhand der Zeichnung in zwei Ausführungsbeispielen noch näher beschrieben.
Es zeigt:

Fig. 1 einen Teillängsschnitt durch ein Ausführungsbeispiel eines Klapplagers, bei welchem ein wippenartiger, in der Ausnehmung des Aufnahmeteiles gelagerter, gegen die Kraft einer Feder nachgiebiger Kupplungsvorsprung mit stirnseitigen Schlitzen des Zapfens der Wickelwelle zusammenwirkt,
Fig. 2 eine Stirnseite des Klapplagers nach Fig. 1 mit einem Querschnitt durch den wippenartigen Kupplungsvorsprung nahe seiner Kupplungsoberfläche,
Fig. 3 eine der Fig.2 entsprechende Darstellung mit einem Querschnitt durch den Kupplungsvorsprung im Bereich seiner Schwenklagerung,
Fig. 4 einen Horizontalschnitt durch das Klapplager gemäß Fig. 1 und die Lagerstelle des Kupplungsvorsprunges, gemäß Linie IV - IV in Fig. 2,
Fig. 5 die Stirnseite einer abgewandelten Ausführungsform des Klapplagers, bei welcher der Kupplungsvorsprung als axial gegen die Kraft einer Feder eindrückbarer Stift oder Bolzen ausgebildet ist,

Fig. 6 einen Längsschnitt durch ein Klapplager gemäß der Linie VI - VI in Fig. 5 und
Fig. 7 in schematischer Darstellung die Stirnseite eines Klapplagers gem. Fig.1 und einen zunächst noch seitlich versetzten Kupplungszapfen mit stirnseitigen Kupplungsschlitzen vor dem Einsetzen in die Ausnehmung des Aufnahmeteiles dieses Klapplagers.

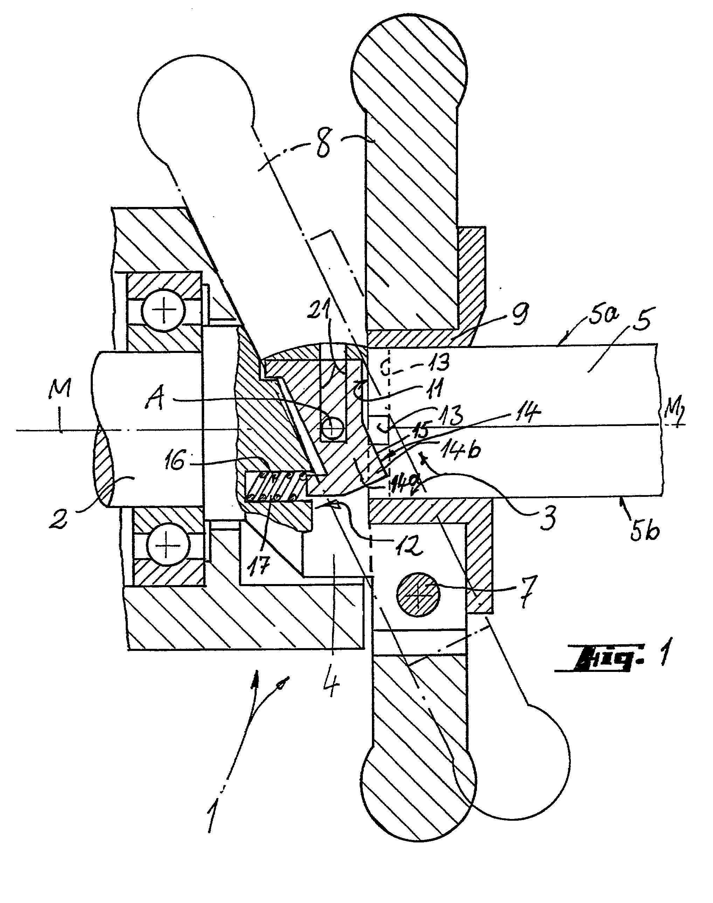

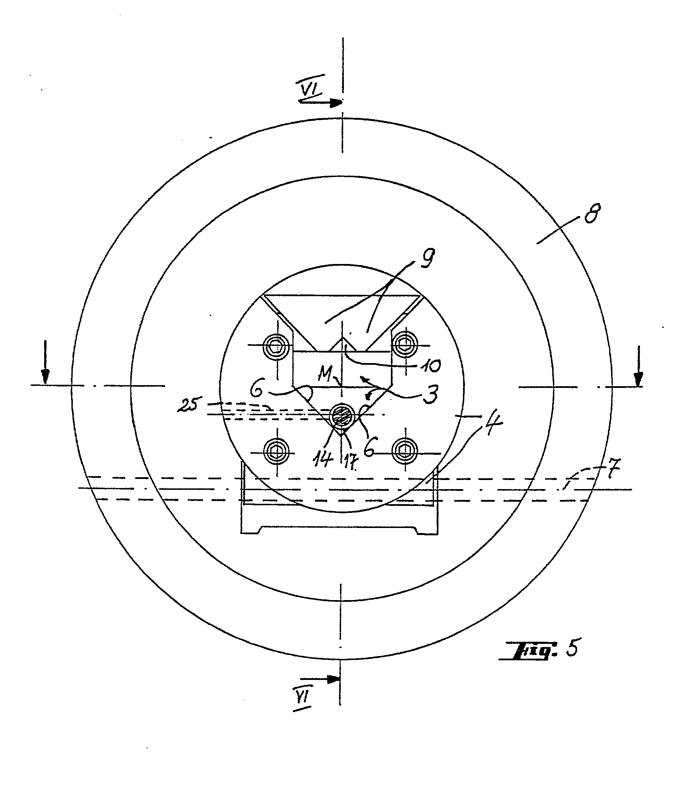

Ein in beiden Ausführungsbeispielen jeweils im ganzen mit 1 bezeichnetes Klapplager zum Kuppeln von Wickelstäben mit einer Mitnehmerwelle 2 bei von einer Rolle oder auf eine Rolle arbeitenden Maschinen weist in aus dem Stand der Technik bekannter Weise ein eine Kupplungsausnehmung 3 enthaltendes Aufnahmeteil 4 auf. Der nicht näher dargestellte Wickelstab hat an seinen Enden einen im Ausführungsbeispiel im Querschnitt vierkantigen Zapfen 5, dessen Querschnitt gem. Fig. 1 und 5 die Ausnehmung 3 und vor allem in dieser befindliche Kupplungsflächen 6 entsprechen. Der Zapfen 5 ist somit formschlüssig in die Ausnehmung 3 des Aufnahmeteiles 4 einsetzbar und auch wieder aus dieser nach oben aushebbar, wenn sich ein zu diesem Klapplager 1 gehöriges, um eine in Aushebeposition horizontale Achse 7 schwenkbares Handrad 8 in der in Fig. 1 mit strichpunktierten Linien dargestellten Öffnungsposition befindet. In Gebrauchsstellung ist der Zapfen 5 von einem an dem schwenkbaren und mitdrehenden Handrad 8 befindlichen Verschlußteil 9 übergriffen, wobei im Ausführungsbeispiel dieser Verschlußteil 9 ebenfalls eine winkelförmige Ausnehmung 10 hat, mit welcher die beim Einlegen oberste Kante 5a des Mehrkantes 5 umschlossen wird. In Schließstellung kann also das Drehmoment in diesem Klapplager über den Vierkant 5 und die entsprechende Ausnehmung 3 des Aufnahmeteiles 4 sowie den Verschlußteil 9 gut übertragen werden.

Bevor jedoch das Handrad 8 in Schließstellung gelangt,könnte beim Anlaufen der Welle 2 bzw. des Zapfens 5 an den schräg liegenden Kupplungsflächen 6 eine Kraftkomponente in Ausheberichtung des Zapfens 5 auftreten. Deshalb ist an der Stirnseite 11 des Zapfens 5 und der entsprechenden Gegenfläche 12 der Ausnehmung 3 des Aufnahmeteiles 4 eine beim Einsetzen des Zapfens 5 wirksam werdende, im folgenden noch näher zu beschreibende Kupplung vorgesehen, die das Anlaufdrehmoment übertragen und somit die schrägen Kupplungsflächen 6 entlasten kann, so daß dort keine Kraftkomponente auftreten kann, die ausreicht, die Wickelwelle aus ihrer Funktionsstellung anzuheben, bevor das Handrad 8 in Schließstellung gelangt ist.

Bei beiden Ausführungsbeispielen weist dabei die erwähnte Kupplung an der Stirnseite des Zapfens 5 zwischen Zapfen 5 und Aufnahmeteil 4 zwei formschlüssig ineinandergreifende Kupplungselemente auf, deren eines in der Wellenaufnahme 4 und deren anderes an der Stirnseite 11 des Zapfens5 angeordnet sind.

In beiden Ausführungsbeispielen ist dabei als das eine Kupplungselement wenigstens ein in Einlegerichtung orientierter, nach der Aushebeseite offen mündender Schlitz 13 und als das andere Kupplungselement wenigstens ein in Gebrauchsstellung und in Drehrichtung formschlüssig in diesen Schlitz 13 eingreifender, ein Drehmoment übertragender, gegenüber der Zapfenmitte M exzentrischer Vorsprung 14 vorgesehen.

Wiederum in beiden Ausführungsbeispielen mit dem vierkantigen Zapfen 5 ist dabei dieser als Kupplungselement dienender etwa nutenförmige Schlitz 13 an der Stirnseite 11 des Zapfens 5 vorgesehen und mündet an der beim Einsetzen am tiefsten liegenden Kante 5 b dieses Vierkant-Zapfens 5 randoffen. Der Kupplungsvorsprung 14 ist somit in der Wellenaufnahme 3 angeordnet.

Es wäre auch eine umgekehrte Anordnung denkbar, bei welcher der Schlitz 13 in der vertikalen Gegenfläche 12 der Ausnehmung 3 des Aufnahmeteiles 4 in der Bewegungsrichtung des Zapfens 5 bei seinem Einsetzen orientiert angeordnet und nach der Oberseite der Ausnehmung 3 des Aufnahmeteiles 4 mündet. Der Kupplungsvorsprung 14 könnte dann an der Stirnseite 11 des Zapfens 5 exzentrisch angeordnet vorstehen. Eine solche Anordnung wäre vor allem bei einem Klapplager sinnvoll, bei dem der Zapfen 5 einen teilweise kreisrunden Querschnitt haben soll. Aber auch bei einem im Querschnitt kreisrunden Zapfen 5 könnte der Schlitz an der Strinseite 11 des Zapfens 5 und der Vorsprung 14 in dem Aufnahmeteil 4 angeordnet sein, wobei unter Umständen bei genügend starker Ausbildung dieser Kupplungteile sogar eine weitere Drehmomentübertragung an der Längsseite des Zapfens 5 ganz entfallen könnte, wenn die zu übertragenden Kräfte genügend gering sind, um dies zuzulassen. Es ergäbe sich dann der Vorteil eines sehr preiswerten, weil im Querschnitt kreisrunden, Zapfens 5.

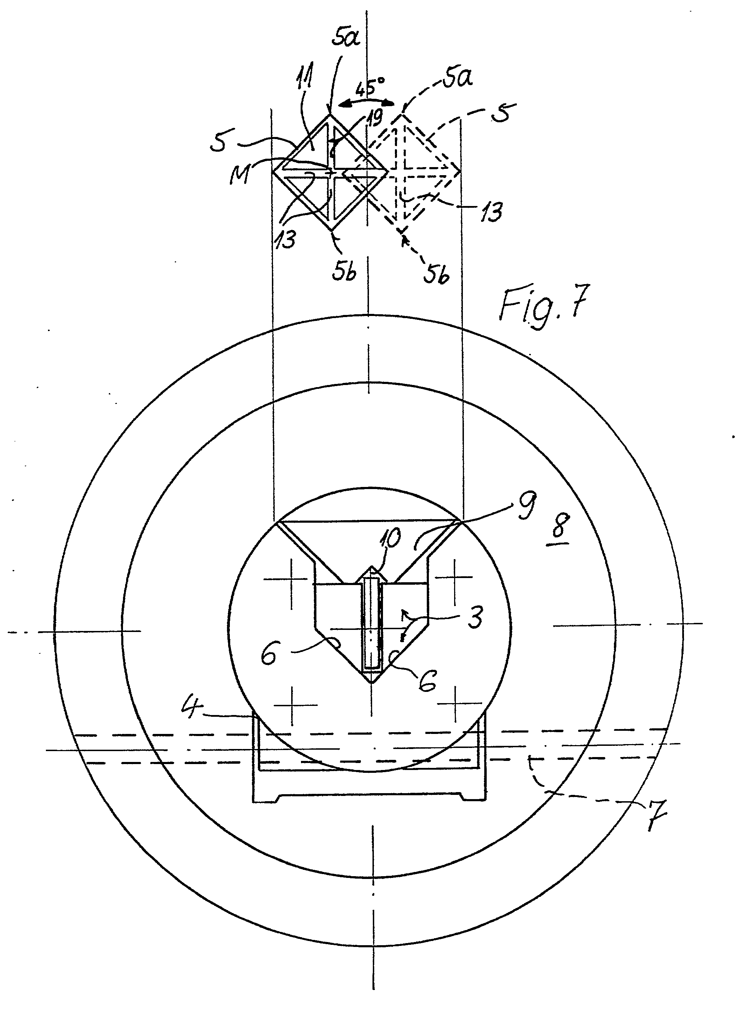

In den Figuren 1, 4, 6 und 7 erkennt man, daß der Kupplungsschlitz 13 an dem Zapfen 5 über dessen gesamte Stirnseite verläuft und an seinen beiden Enden randoffen ist, so daß der Zapfen 5 in zwei einander um 180° entgegengesetzten Orientierungen problemlos eingesetzt werden kann. Dabei ist vor allem in Fig. 7 angedeutet, daß mehrere - in diesem Falle des im Querschnitt quadratischen Zapfens 5 - zwei sich kreuzende Kupplungsschlitze 13 an der Stirnseite 11 des Zapfens 5 vorgesehen sein können, die jeweils im Bereich einer Kante randoffen münden. Dadurch kann jede für das Einsetzen und Ausheben brauchbare Position des Zapfens 5 zu der gewünschten stirnseitigen Kupplung führen. Bei dem in den Ausführungsbeispielen vorgesehenen Vierkant als Wellenzapfen 5 sind demgemäß zwei auf den Diagonalen der Stirnseiten 11 dieser Vierkante verlaufende randoffene Schlitze 13 vorgesehen.

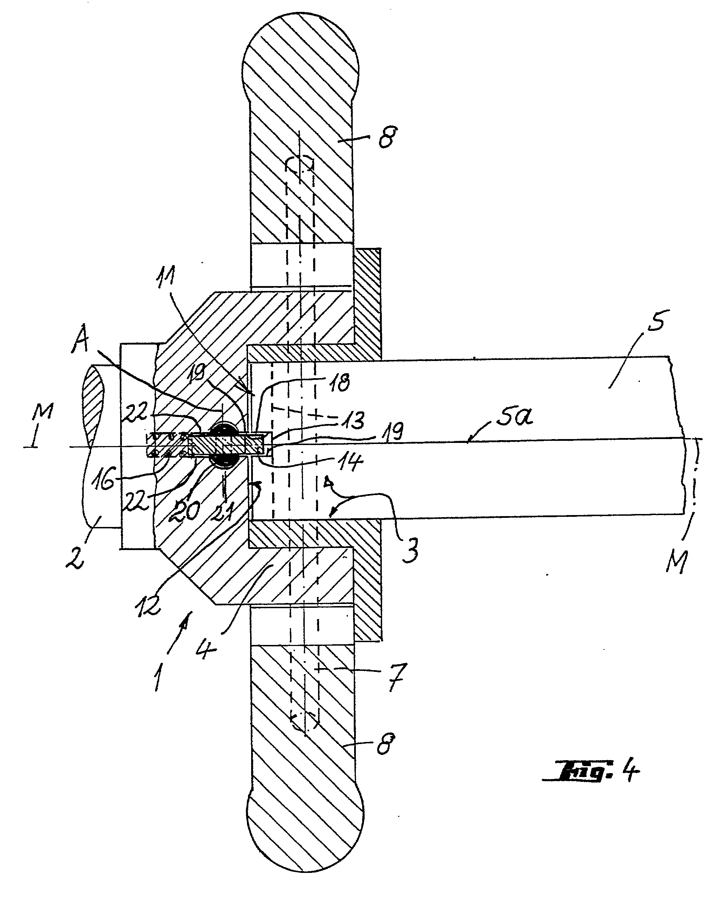

In Fig. 4 ist angedeutet, daß der Kupplungsvorsprung 14 in seiner Breite oder seitlichen Ausdehnung der Weite des Kupplungsschlitzes 13 entspricht, um möglichst spielfrei ein Drehmoment übertragen zu können.

Die dargestellten Ausführungsbeispiele haben außerdem eine Ausgestaltung gemeinsam, die zum Ausgleich eines nicht lagegerechten Einlegens des Zapfens 5 dienen, wie dies in Fig.7 angedeutet ist. Dazu ist der Kupplungsvorsprung 14 nachgiebig, im Ausführungsbeispiel jeweils federbelastet und hat eine in Einlegerichtung mehr und mehr vorstehende Schrägfläche 15 zum Zurückdrängen durch das Einlegen des Wellenzapfens 5 und dessen Stirnseite 11 an nicht geschlitzten Bereichen gegen die Kraft der Feder 16. Ist dann der Zapfen 5 in die lagegerechte Position zentriert, kann der federbelastete Kupplungsvorsprung 14 in die entsprechende Gegenausnehmung einrasten und einspringen und formschlüssig eingreifen.

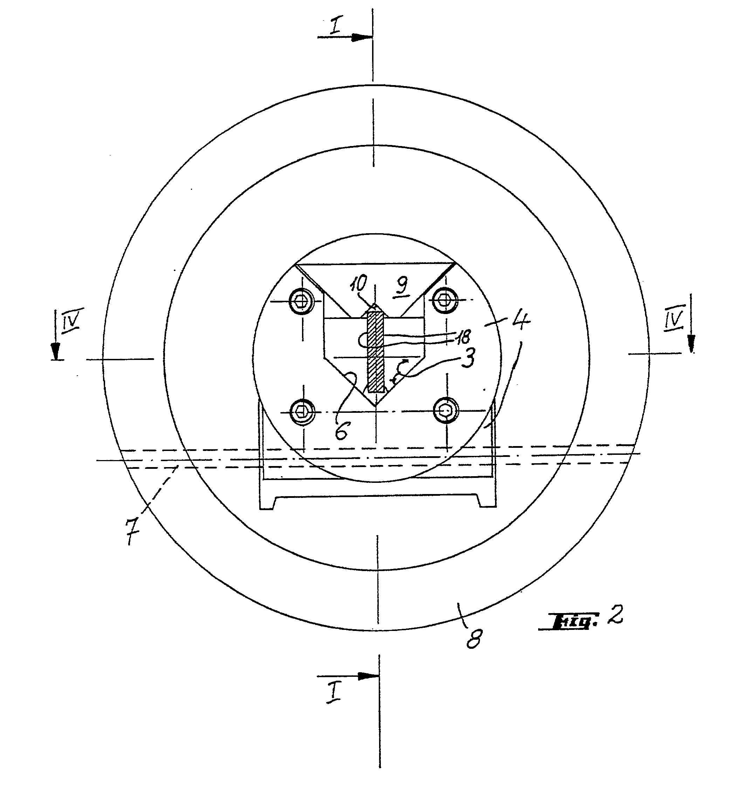

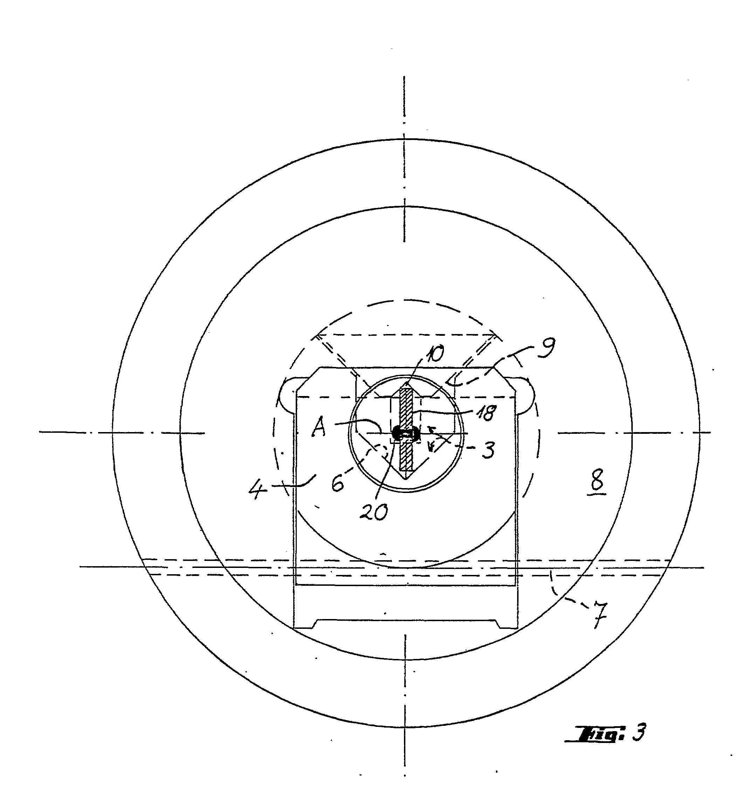

In dem Ausführungsbeispiel gemäß den Figuren 1 bis 4 ist der Kupplungsvorsprung 14 wippenartig ausgebildet und um eine quer zur Einsteckrichtung des Zapfens 5 orientierte Achse A schwenkbar. Dabei liegt diese Achse A in Gebrauchsstellung etwa auf der Mitte M des Zapfens 5 und der Welle 2 und der tieferliegende Arm 14 a dieser Wippe bildet praktisch den schrägen, unter Umständen durch den Wellenzapfen 5 bis zum Eintritt in den Kupplungsschlitz gegen die Kraft der Feder 16 verstellbaren Kupplungsvorsprung. In Fig. 1 erkennt man deutlich diesen Arm 14 a, welcher mit einem dem Zapfen 5 zugewandten Bereich 14 gleichzeitig den Kupplungsvorsprung bildet und dort auch die von oben nach unten mehr und mehr vorstehende Schrägfläche 15 hat, an welcher die Stirnseite 11 des Zapfens 5 angreifen kann, falls nicht der Schlitz 13 sofort über den Vorsprung 14 greift. Bei einem Angriff eines ungeschlitzten Bereiches der Stirnseite 11 an der Schrägfläche 15 wird somit die Wippe um ihre Achse A verschwenkt, wobei der Arm 14 a mit einem Vorsprung 14b gegen die in einer Ausnehmung 17 angeordnete Feder drückt und diese im Sinne der gewünschten Rückstellkraft spannt. Gelangt dann bei der weiteren Einlegebewegung des Zapfens 5 durch die Zentrierung der Kupplungsflächen 16 der Schlitz 13 in die gewünschte Position, kann die Feder 16 den Kupplungsvorsprung 14 in den Schlitz 13 einrücken und so die gewünschte in Drehrichtung formschlüssige Kupplung herstellen. Dabei erkennt man in Fig. 4, daß die dabei in Berührung miteinander gelangenden seitlichen Flächen 18 des Kupplungsvorsprunges 14 und die Seitenwände 19 des Schlitzes 13 parallel zueinanderliegen, so daß das Ein- und Ausrücken einfach ist, dennoch aber ein Drehmoment übertragen werden kann, ohne daß daraus eine Belastung des nachgiebigen Kupplungsvorsprunges 14 in Löseposition der Kupplung auftreten kann.

Der Kupplungsvorsprung 14 ist dabei mittels zweier seitlich vorspringender Köpfe, im Ausführungsbeispiel Nietenköpfe 20 schwenkbar in einer diese Köpfe 20 umschließenden Öffnung, gemäß Fig. 1 einem von oben zugänglichen Schlitz 21, gehalten und durch Seitenwände 22 zumindest bereichsweise seitlich geführt, so daß einerseits die konstruktive Anordnung dieses wippenartigen Kupplungsvorsprunges 14 einfach ist und er andererseits präzise und genügend genau arbeiten kann.

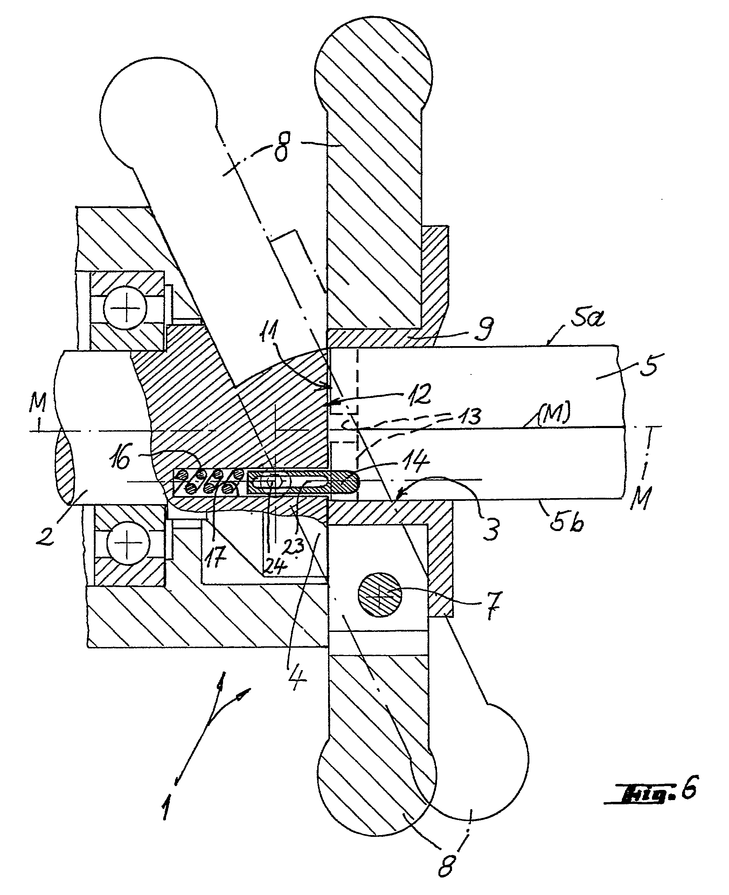

Im Ausführungsbeispiel gemäß den Figuren 5 und 6 ist der Kupplungsvorsprung 14 ein in dem Aufnahmeteil 4 etwa parallel zu der Erstreckung der Welle 2 und des Zapfens 5 vorstehender, wiederum durch eine Druckfeder 16 belasteter Stift, dessen vorstehendes Ende in Gebrauchsstellung exzentrisch in den Kupplungsschlitz 13 des Zapfens 5 als Kupplungsvorsprung 14 eingreift. In Fig. 6 erkennt man, daß dabei das vorstehende Ende dieses Stiftes abgerundet ist, so daß diese Formgebung wiederum der Schräge 15 im Ausführungsbeispiel nach Fig. 1 entspricht und in gleicher Weise wirksam wirken kann, indem nämlich bei einem nicht lagegerechten Einsetzen des Kupplungszapfens ungeschlitzte Bereiche seiner Stirnseite 11 diesen Stift und somit den gesamten Kupplungsvorsprung 14 gegen die Kraft der Feder 16 zurückschieben können, bis sich der Schlitz 13 in der Position befindet, in welcher der Kupplungsvorsprung in ihn eingreifen kann. Dabei zeigt Fig. 6 außerdem, daß der Kupplungsstift wiederum in einer Führungsbohrung 17 des Aufnahmeteiles 4 zusammen mit der Feder 16 angeordnet ist, wobei er nahe der unteren Spitze oder Umrißlinie des Querschnittes der Ausnehmung 3 dieses Aufnahmeteiles 4 mit größtmöglicher Exzentrizität zur Wellenmitte M angeordnet ist, um günstige Hebeverhältnisse für die Drehmomentenübertragung zu schaffen. Der als Kupplungsvorsprung 14 dienende Stift hat dabei ein Langloch 23, mit welchem er an einem ihn quer durchsetzenden Querstift 24 in Verschieberichtung gegen die Druckkraft seiner Druckfeder 16 geführt ist. In Fig. 5 ist angedeutet, wie dieser Querstift von der Seite her in der Wellenaufnahme 4 angeordnet werden kann. Es zeigt sich, daß vor allem diese Ausführungsform auch an schon bestehenden Klapplagern 1 nachträglich angebracht werden kann, indem die Bohrung 17 und eine Querbohrung 25 für den Querstift 24 angebracht werden, wonach bereits der Kupplungsvorsprung 14 in Form des federbelasteten Stiftes eingesetzt werden kann. Somit kann dann in ein solches nachgerüstetes Klapplager 1 ein mit stirnseitigen Kupplungsschlitzen 13 versehener Zapfen eingesetzt werden, der die vorbeschriebenen Vorteile hat.

Ist ein Wellenzapfen 5 in der erfindungsgemäßen Weise in die Ausnehmung 3 des Aufnahmeteiles 4 des Klapplagers 1 eingesetzt und dabei selbsttätig zentriert und außerdem stirnseitig gekuppelt worden, kann der den Zapfen 5 aufweisende Wickelstab anlaufen, ohne daß an den schrägen Kupplungsflächen 6 eine derartige Kraftkomponente auftritt, daß dadurch der Zapfen 5 seine mit der Welle 2 fluchtende Lage wieder verläßt. Somit kann das Verschließen des Handrades 8 ungestört erfolgen, wonach die endgültige und sichere Kupplung zwischen Wickelstab und Mitnehmerwelle 2 beendet ist, ohne daß es einer speziellen Hilfsvorrichtung für das Schließen des Handrades 8 bedarf. Dennoch können die Vorteile von sich in Einlegerichtung annähernden Kupplungsflächen 6 für die gute Zentrierung des Zapfens 5 ausgenutzt werden.

**Patentansprüche**

1. Klapplager (1) zum Kuppeln von Wickelstäben mit einer Mitnehmerwelle bei von einer Rolle oder auf eine Rolle arbeitenden Maschinen, wobei der Wickelstab mit einem im Querschnitt mehrkantigen oder zumindest teilweise runden, wenigstens eine Abflachung aufweisenden Zapfen (5) quer zu seiner Erstreckung in einem dem Querschnitt des Zapfens entsprechende Kupplungsflächen (6) aufweisende Ausnehmung eines Aufnahmeteiles (4) einsetzbar bzw. aus diesem aushebbar ist und die Ausnehmung in Einsetzrichtung zumindest an ihrer tiefsten Stelle einander sich nähernde Kupplungsflächen (6) entsprechend der Anordnung solcher Flächen an dem mehrkantigen oder teilweise runden Zapfen des Wickelstabes hat und wobei der Zapfen in Gebrauchsstellung von einem an einem schwenkbaren und mitdrehenden Handrad (8) od.dgl. befindlichen Verschlußteil (9) übergriffen ist, dadurch gekennzeichnet, daß an der Stirnseite (11) des Zapfens (5) und der entsprechenden Gegenfläche (12) des Aufnahmeteiles (4) eine beim Einsetzen des Zapfens (5) wirksam werdende Kupplung vorgesehen ist.

2. Klapplager nach Anspruch 1, dadurch gekennzeichnet, daß die Kupplung zwischen Zapfen (5) und Aufnahmeteil (4) zwei formschlüssig ineinandergreifende Kupplungselemente aufweist, deren eines in der Wellenaufnahme (4) und deren anderes an der Stirnseite (11) des Zapfens (5) angeordnet sind.

3. Klapplager nach Anspruch 1 oder 2, dadurch gekennzeichnet, daß als das eine Kupplungselement wenigstens ein in Einlegerichtung orientierter, nach der Aushebeseite offen mündender Schlitz (13) und als das andere Kupplungselement wenigstens ein in Gebrauchsstellung und in Drehrichtung formschlüssig in diesen Schlitz (13) eingreifender, ein Drehmoment übertragender, gegenüber der Zapfenmitte (M) exzentrischer Vorsprung (14) vorgesehen sind.

4. Klapplager mit einem im Querschnitt vorzugsweise mehrkantigen Zapfen nach einem der Ansprüche 1 bis 3, dadurch gekennzeichnet, daß der als das eine Kupplungselement dienende Schlitz (13) an der Stirnseite (11) des Zapfens (5) vorgesehen ist und an der beim Einsetzen am tiefsten liegenden Kante (5b) randoffen mündet, und daß der Kupplungsvorsprung (14) in der Wellenaufnahme (3) angeordnet ist.

5. Klapplager mit einem eine Abflachung od.dgl. aufweisenden, im übrigen im Querschnitt vorzugsweise wenigstens teilweise kreisrunden Zapfen nach einem der Ansprüche 1 bis 3, dadurch gekennzeichnet, daß der Schlitz (13) in der etwa vertikalen Gegenfläche (12) der Ausnehmung (3) des Aufnahmeteiles (4) in der Bewegungsrichtung des Zapfens (5) bei seinem Einsetzen orientiert angeordnet und nach der Oberseite der Ausnehmung (3) des Aufnahmeteiles (4) randoffen mündet, und daß der Kupplungs vorsprung (14) an der Stirnseite (11) des Zapfens (5) exzentrisch angeordnet vorsteht.

6. Klapplager nach einem der Ansprüche 1 bis 4, dadurch gekennzeichnet, daß der Kupplungsschlitz (13) an dem Zapfen (5) über dessen gesamte Stirnseite verläuft und an seinen beiden Enden randoffen ist.

7. Klapplager nach einem der Ansprüche 1 bis 6, dadurch gekennzeichnet, daß mehrere, wenigstens zwei sich kreuzende Kupplungsschlitze (13) an der Stirnseite (11) des Zapfens (5) vorgesehen sind, die bei einem im Querschnitt mehrkantigen Zapfen jeweils im Bereich einer Kante randoffen münden.

8. Klapplager nach einem der Ansprüche 1 bis 7, dadurch gekennzeichnet, daß bei einem Vierkant als Wellenzapfen (5) zwei auf den Diagonalen der Stirnseiten (11) des Vierkantes verlaufende, vorzugsweise randoffene Schlitze (13) vorgesehen sind.

9. Klapplager nach einem der Ansprüche 1 bis 8, dadurch gekennzeichnet, daß der Kupplungsvorsprung (14) in seiner Breite oder seitlichen Ausnehmung der Weite des Kupplungsschlitzes (13) entspricht.

10. Klapplager nach einem der Ansprüche 1 bis 9, dadurch gekennzeichnet, daß der Kupplungsvorsprung (14) zum Ausgleichen eines nicht lagegerechten Einlegens des Zapfens (5) nachgiebig, vorzugsweise federbelastet ist und eine in Einlegerichtung mehr und mehr vorstehende Schrägfläche (15) od.dgl. zum Zurückdrängen durch das Einlegen des Wellenzapfens (5) gegen die Kraft der Feder (16) hat.

11. Klapplager nach einem der Ansprüche 1 bis 10, dadurch gekennzeichnet, daß der Kupplungsvorsprung (14) wippenartig ausgebildet ist und um eine quer zur Erstreckungsrichtung des Zapfens (5) orientierte Achse (A) schwenkbar ist, wobei diese Achse (A) in Gebrauchsstellung etwa auf der Mitte (M) des Zapfens (5) und der Welle (2) liegt und der tieferliegende Arm (14a) der Wippe als schräger, gegebenenfalls durch den Wellenzapfen (5) bis zum Eintritt in den Kupplungsschlitz gegen die Kraft einer Feder (16) verstellbarer Kupplungsvorsprung (14) vorsteht.

12. Klapplager nach einem der Ansprüche 1 bis 11, dadurch gekennzeichnet, daß der Kupplungsvorsprung (14) mittels zweier seitlicher vorspringender Köpfe vorzugsweise Nietenköpfe (20) schwenkbar in einer diese Köpfe umschließenden Öffnung einem Schlitz (21) od.dgl. gehalten und durch Seitenwände (22) zumindest bereichsweise seitlich geführt ist.

13. Klapplager nach einem der Ansprüche 1 bis 10, dadurch gekennzeichnet, daß der Kupplungsvorsprung (14) ein in dem Aufnahmeteil (4) etwa parallel zu der Erstreckung der Welle (2) vorstehender, vorzugsweise durch eine Druckfeder (16) belasteter Stift ist, dessen vorstehendes Ende in Gebrauchsstellung exzentrisch in den Kupplungsschlitz (13) des Zapfens (5) eingreift.

14. Klapplager nach Anspruch 13, dadurch gekennzeichnet, daß das vorstehende Ende des Stiftes abgeschrägt oder abgerundet ist.

15. Klapplager nach einem der Ansprüche 10, 13 oder 14, dadurch gekennzeichnet, daß der als Kupplungsvorsprung (14) dienende Stift mittels eines ihn an einem Langloch od.dgl. quer durchsetzenden Querstiftes in Verschieberichtung entgegen der Druckkraft seiner Druckfeder geführt ist.

16. Klapplager nach einem der Ansprüche 10 oder 13 bis 15, dadurch gekennzeichnet, daß der Kupplungsstift in einer Führungsbohrung (17) od.dgl. des Aufnahmeteiles (4) nahe der unteren Spitze oder Umrißlinie des Querschnittes der Ausnehmung (3) mit größtmöglicher Exzentrizität zur Wellenmitte (M) angeordnet ist.

**Claims**

1. A bearing (1) for coupling winding shafts to a driving shaft in machines working from a reel or onto a reel, the winding shaft having a journal (5) which is multiedged in cross section or at least partly round and has at least one flattening, the winding shaft being adapted to be inserted with said journal transversely to the path of said shaft into a recess which belongs to a receiving part (4) and has coupling faces (6) corresponding to the cross section of the journal and to be lifted out of the same, and the recess having in the direction of insertion coupling faces (6) converging at least at the deepest point of said recess and corresponding to the arrangement of such faces on the multi-edged or partly round journal of the winding shaft, and in the position for use a locking part (9) located on a swingable and co-rotating handwheel (8) or the like engaging over the journal, characterized in that a coupling becoming operative upon insertion of the journal (5) is provided at the front end (11) of the journal (5) and at the corresponding counter-face (12) of the receiving part (4).

2. The bearing as claimed in claim 1, characterized in that the coupling between journal (5) and receiving part (4) has two coupling elements engaging in a form-locking manner, the one coupling element being disposed in the shaft carrier (4) and the other one being disposed at the front end (11) of the journal (5).

3. The bearing as claimed in claim 1 or claim 2, characterized in that at least one slit (13) which is oriented in the direction of insertion and ends open towards the side of lifting is provided as the one coupling element, and at least one projection (14) which engages in said slit (13) in a form-locking manner in the position for use and in the direction of rotation, transfers torque and is eccentric relative to the centre (M) of the journal is provided as the other coupling element.

4. A bearing including a journal which is preferably multiedged in cross section, as claimed in any one of claims 1 to 3, characterized in that the slit (13) serving as the one coupling element is provided at the front end (11) of the journal (5) and ends so as to be peripherally open at the edge (5b) lowermost upon insertion, and that the coupling projection (14) is disposed in the shaft carrier (3).

5. A bearing including a journal which has a flattening or the like and as for the rest is preferably at least partly circular in cross section, as claimed in any one of claims 1 to 3, characterized in that the slit (13) is disposed in the approximately vertical counter-face (12) of the recess (3) in the receiving part (4) so as to be oriented in the direction in which the journal (5) moves upon being inserted and ends so as to be peripherally open towards the top of the recess (3) in the receiving part (4), and that the coupling projection (14) protrudes so as to be arranged eccentrically at the front end (11) of the journal (5).

6. The bearing as claimed in any one of claims 1 to 4, characterized in that the coupling slit (13) extends over the entire front end of the journal (5) and has its two ends peripherally open.

7. The bearing as claimed in any one of claims 1 to 6, characterized in that a plurality of coupling slits (13), at least two intersecting coupling slits (13), are provided at the front end (11) of the journal (5), in the case of a journal which is multi-edged in cross section said slits in each case ending so as to be peripherally open in the region of an edge.

8. The bearing as claimed in any one of claims 1 to 7, characterized in that in the case of the shaft journal (5) being a square, two slits (13), preferably peripherally open ones, extending along the diagonal lines of the end faces (11) of the square are provided.

9. The bearing as claimed in any one of claims 1 to 8, characterized in that the coupling projection (14) corresponds in its breadth or lateral expanse to the width of the coupling slit (13).

10. The bearing as claimed in any one of claims 1 to 9, characterized in that in order to make up for the journal (5) being inserted out of position, the coupling projection (14) is flexible, preferably springloaded, and has a slant (15) or the like protruding increasingly in the direction of insertion for being pushed back through the insertion of the shaft journal (5) against the force of the spring (16).

11. The bearing as claimed in any one of claims 1 to 10, characterized in that the coupling projection (14) takes a rocker-like form and is swingable about an axis (A) oriented transversely to the direction in which the journal (5) extends, in the position for use said axis (A) lying approximately at the centre (M) of the journal (5) and the shaft (2), and the lower arm (14a) of the rocker protrudes as a slanting coupling projection (14) possibly adjustable against the force of a spring (16) by the shaft journal (5) until entry into the coupling slit.

12. The journal as claimed in any one of claims 1 to 11, characterized in that the coupling projection (14) is held in a swingable manner by two laterally protruding heads, preferably rivet heads (20), in an opening, a slit (21) or the like surrounding said heads and is laterally guided at least in areas by side walls (22).

13. The bearing as claimed in any one of claims 1 to 10, characterized in that the coupling projection (14) is a pin which protrudes in the receiving part (4) so as to be approximately parallel to the path of the shaft (2) and is preferably loaded by a compression spring (16), in the position for use the protruding end of said pin engaging eccentrically into the coupling slit (13) of the journal (5).

14. The bearing as claimed in claim 13, characterized in that the protruding end of the pin is bevelled or rounded off.

15. The bearing as claimed in any one of claims 10, 13 or 14, characterized in that the pin serving as the coupling projection (14) has an oblong hole or the like traversed crossways by a transverse pin to guide said former pin in the direction of shift against the pressure of the compression spring thereof.

16. The bearing as claimed in any one of claims 10 or 13 to 15, characterized in that the coupling pin is disposed in a guide bore (17) or the like of the receiving part (4) close to the lower tip or outline of the cross section of the recess (3), with the maximum eccentricity to the centre (M) of the shaft.

## Revendications

1. Palier basculant (1) pour coupler des arbres enrouleurs à un arbre menant, dans des machines travaillant avec un rouleau ou sur un rouleau, l'arbre enrouleur pouvant, par un pivot (5) de section polygonale ou du moins partiellement ronde et présentant au moins un méplat, être inséré perpendiculairement à son développement dans un évidement d'une partie réceptrice (4) présentant des faces d'accouplement (6) qui correspondent à la section du pivot, ou selon le cas être enlevé de cet évidement, et l'évidement présentant des faces d'accouplement (6) qui se rapprochent entre elles dans le sens d'insertion, au moins en leur point le plus profond, conformément à la disposition de telles faces sur le pivot polygonal ou partiellement rond de l'arbre enrouleur, et le pivot étant, en position d'utilisation, entouré par une partie de fermeture (9) qui se trouve sur un volant à main (8) ou similaire pivotant et conjointement rotatif, caractérisé en ce qu'il est prévu, sur le côté frontal (11) du pivot (5) et sur la contre-face correspondante (12) de la partie réceptrice (4), un accouplement qui devient opérationnel lors de l'insertion du pivot (5).

2. Palier basculant selon la revendication 1, caractérisé en ce que l'accouplement entre le pivot (5) et la partie réceptrice (4) présente deux éléments accouplement s'engageant l'un dans l'autre par complémentarité de forme, dont l'un est disposé dans le logement d'arbre (4) et l'autre sur le côté frontal (11) du pivot (5).

3. Palier basculant selon la revendication 1 ou 2, caractérisé en ce qu'il est prévu comme premier élément d'accouplement au moins une fente (13) orientée dans le sens d'insertion et débouchant vers le côté de soulèvement, et comme autre élément d'accouplement au moins une partie en saillie (14), excentrique par rapport au centre (M) du pivot, qui transmet un couple de rotation et qui, en position d'utilisation et dans le sens de rotation, s'engage par complémentarité de forme dans cette fente (13).

4. Palier basculant avec un pivot de section de préférence polygonale selon l'une des revendications 1 à 3, caractérisé en ce qu'une fente (13) servant de premier élément d'accouplement est prévue sur le côté frontal (11) du pivot (5) et débouche à bord ouvert sur l'arête (5b) du pivot qui est située la plus profonde lors de l'insertion, et en ce que la partie d'accouplement en saillie (14) est disposée dans le logement d'arbre (3).

5. Palier basculant avec un pivot présentant un méplat ou similaire et dont le reste de la section est, de préférence, au moins partiellement circulaire selon l'une des revendications 1 à 3, caractérisé en ce que la fente (13) est disposée dans la contre-face (12) approximativement verticale de l'évidement (3) de la partie réceptrice (4), en étant orientée dans le sens de déplacement du pivot (5) lors de son insertion, et débouche à bord ouvert vers le côté supérieur de l'évidement (3) de la partie réceptrice (4), et en ce que la partie d'accouplement en saillie (14) dépasse du côté frontal (11) du pivot (5), en étant disposée excentriquement.

6. Palier basculant selon l'une des revendications 1 à 4, caractérisé en ce que la fente d'accouplement (13) s'étend sur tout le côté frontal du pivot (5), et est à bord ouvert à ses deux extrémités.

7. Palier basculant selon l'une des revendications 1 à 6, caractérisé en ce qu'il est prévu plusieurs – au moins de – fentes d'accouplement se croisant sur le côté frontal (11) du pivot (5), lesquelles, dans le cas d'un pivot de section polygonale, débouche chacune à bord ouvert dans la région d'une arête respective.

8. Palier basculant selon l'une des revendications 1 à 7, caractérisé en ce que, dans le cas d'un quatre-pans comme pivot d'arbre (5), il est prévu deux fentes (13), de préférence à bord ouvert, s'étendant sur les diagonales des côtés frontaux (11) du quatre-pans.

9. Palier basculant selon l'une des revendications 1 à 8, caractérisé en ce que la partie d'accouplement en saillie (14) correspond dans sa largeur ou son évidement latéral à la largeur de la fente d'accouplement (13).

10. Palier basculant selon l'une des revendications 1 à 9, caractérisé en ce que la partie d'accouplement en saillie (14) est flexible, et de préférence élastiquement contrainte, afin de compenser une insertion en position incorrecte du pivot (5), et possède une face inclinée (15) ou similaire, de plus en plus en saillie dans le sens d'insertion, afin que l'insertion du pivot d'arbre (5) engendre un refoulement à l'encontre de la force du ressort (16).

11. Palier basculant selon l'une des revendications 1 à 10, caractérisé en ce que la partie d'accouplement en saillie (14) est configurée à la manière d'une bascule, et peut pivoter autour d'un axe (A) orienté perpendiculairement an sens de développement du pivot (5), cet axe (A) étant situé, en position d'utilisation, approximativement au centre (M) du pivot (5) et de l'arbre (2), et le bras (14a) de la bascule qui est situé le plus profond fait saillie en tant que partie d'accouplement en saillie (14) inclinée, le cas échéant déplaçable par le pivot d'arbre (5) à l'encontre la force d'un ressort (16) jusqu'à l'entrée dans la fente d'accouplement.

12. Palier basculant selon l'une des revendications 1 à 11, caractérisé en ce que la partie d'accouplement en saillie (14) est, au moyen de deux têtes saillantes latérales, têtes de rivets (20) de préférence, maintenue pivotante dans une ouverture d'une fente (21) ou similaire qui entoure ces têtes, et est guidée latéralement, au moins par endroits, par des parois latérales (22).

13. Palier basculant selon l'une des revendications 1 à 10, caractérisé en ce que la partie d'accouplement en saillie (14) est une broche qui fait saillie dans la partie réceptrice (4) approximativement parallèlement au développement de l'arbre (2), qui est de préférence sollicitée par un ressort de compression (16), et dont l'extrémité en saillie, en position d'utilisation, s'engage excentriquement dans la fente d'accouplement (13) du pivot (5).

14. Palier basculant selon la revendication 13, caractérisé en ce que l'extrémité en saillie de la broche est biseautée ou arrondie.

15. Palier basculant selon l'une des revendications 10, 13 ou 14, caractérisé en ce que la broche servant de partie d'accouplement en saillie (14) est, au moyen d'une broche transversale qui la traverse perpendiculairement dans un orifice oblong ou similaire, guidée dans le sens de déplacement à l'encontre de la force de compression de son ressort de compression.

16. Palier basculant selon l'une des revendications 10 ou 13 à 15, caractérisé en ce que la broche d'accouplement est disposée dans un alésage de guidage (17) ou similaire de la partie réceptrice (4), à proximité de la pointe inférieure ou périmètre inférieur de la section de l'évidement (3), et avec une excentricité maximale par rapport au centre (M) de l'arbre.

*Fig. 1*

Fig. 2

*Fig. 3*

Fig. 4

*Fig. 5*

*Fig. 6*

Fig.7